# EUROPEAN PATENT APPLICATION

(11) **EP 1 246 338 A1**
(43) Date of publication of application: **02.10.2002**
(21) Application number: 01107703.9
(22) Date of filing: 29.03.2001
(51) Int. Cl.: H02J 7/02

(54) **Device for charging a battery unit of a mobile telephone handset**

(71) Applicant: Chen, I-Ming, Nei-Hu District, Taipei City (TW)
(72) Inventor: Chen, I-Ming, Nei-Hu District, Taipei City (TW)
(74) Representative: VOSSIUS & PARTNER

(57) **Abstract**

A device for charging a battery unit of a mobile telephone handset includes an electric field generating unit (1) for generating an electric field, and a charging current generating unit adapted to be disposed on the mobile telephone handset. The charging current generating unit includes a sensing coil (10) for sensing the electric field from the electric field generating unit and for generating a current signal corresponding to the electric field sensed thereby, and a current processing circuit, coupled electrically to the sensing coil, for receiving and processing the current signal so as to result in a charging current that is adapted to charge the battery unit of the mobile telephone handset.

## Description

The invention relates to a device for charging a battery unit of a mobile telephone handset, more particularly to a device that can be used to charge battery units of mobile telephone handsets of different models without requiring matching battery chargers.

Mobile telephone handsets are very popular nowadays, and it is not uncommon for a user to have more than one mobile telephone handset. As charging of battery units of conventional mobile telephone handsets requires matching battery chargers, it is quite inconvenient.

Therefore, the main object of the present invention is to provide a device for charging a battery unit of a mobile telephone handset that can be used to charge battery units of mobile telephone handsets of different models without requiring matching battery chargers.

This object is achieved by the subject-matter according to the claims.

According to one aspect of the present invention, a device for charging a battery unit of a mobile telephone handset includes an electric field generating unit for generating an electric field, and a charging current generating unit adapted to be disposed on the mobile telephone handset. The charging current generating unit includes: a sensing coil for sensing the electric field from the electric field generating unit and for generating a current signal corresponding to the electric field sensed thereby; and a current processing circuit, coupled electrically to the sensing coil, for receiving and processing the current signal so as to result in a charging current that is adapted to charge the battery unit of the mobile telephone handset.

According to another aspect of the present invention, a charging current generating unit is adapted to be disposed on a mobile telephone handset so as to charge a battery unit of the mobile telephone handset. The charging current generating unit includes: a sensing coil adapted to sense an electric field from an external electric field generating unit, the sensing coil generating a current signal corresponding to the electric field sensed thereby; and a current processing circuit, coupled electrically to the sensing coil, for receiving and processing the current signal so as to result in a charging current that is adapted to charge the battery unit.

According to a further aspect of the present invention, a charging current generating unit is adapted to be disposed on a battery unit of a mobile telephone handset. The charging current generating unit includes: a sensing coil adapted to sense an electric field from an external electric field generating unit, the sensing coil generating a current signal corresponding to the electric field sensed thereby; and a current processing circuit, coupled electrically to the sensing coil, for receiving and processing the current signal so as to result in a charging current that is adapted to charge the battery unit.

According to still another aspect of the present invention, a battery unit for a mobile telephone handset includes a main body and a charging current generating unit disposed on the main body. The charging current generating device includes: a sensing coil adapted to sense an electric field from an external electric field generating unit, the sensing coil generating a current signal corresponding to the electric field sensed thereby; and a current processing circuit, coupled electrically to the sensing coil, for receiving and processing the current signal so as to result in a charging current that is used to charge the main body.

Other features and advantages of the present invention will become apparent in the following detailed description of the preferred embodiment with reference to the accompanying drawings, of which:
Figure 1 is a fragmentary perspective view of an electric field generating unit of the preferred embodiment of a device for charging a battery unit of a mobile telephone handset according to the invention;
Figure 2 is a schematic circuit block diagram of the electric field generating unit of the preferred embodiment;
Figure 3 is a schematic circuit block diagram of a charging current generating unit of the preferred embodiment;
Figure 4 is a perspective view showing the charging current generating unit of the preferred embodiment in a first preferred state of use;
Figure 5 is a schematic view illustrating the charging current generating unit of the preferred embodiment in a second preferred state of use;
Figure 6 is a perspective view illustrating the charging current generating unit of the preferred embodiment in a third preferred state of use; and
Figure 7 is a perspective view illustrating the charging current generating unit of the preferred embodiment in a fourth preferred state of use.

Before the present invention is described in greater detail, it should be noted that like elements are denoted by the same reference numerals throughout the disclosure.

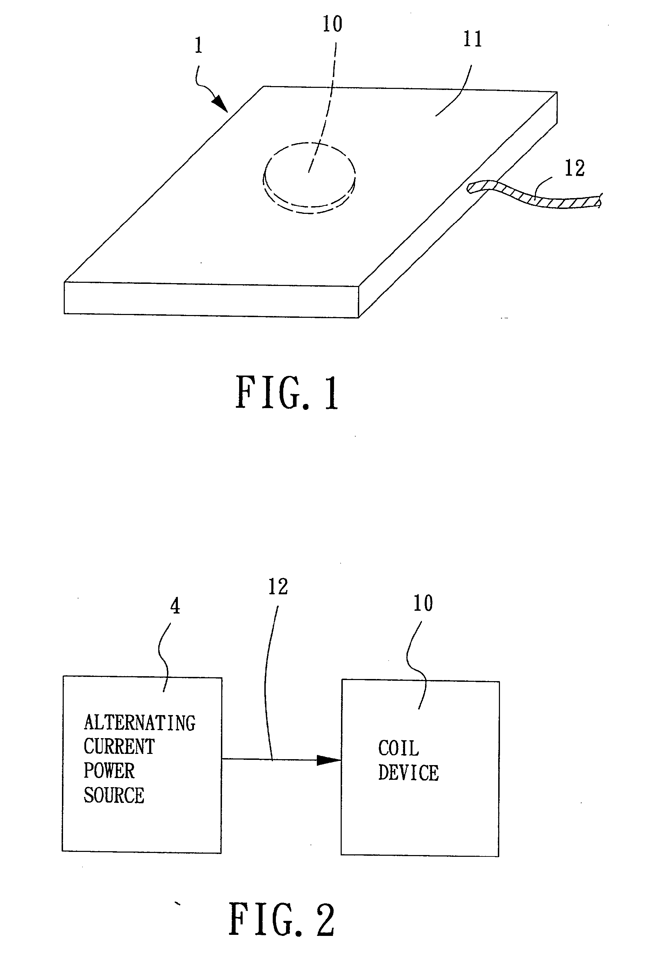

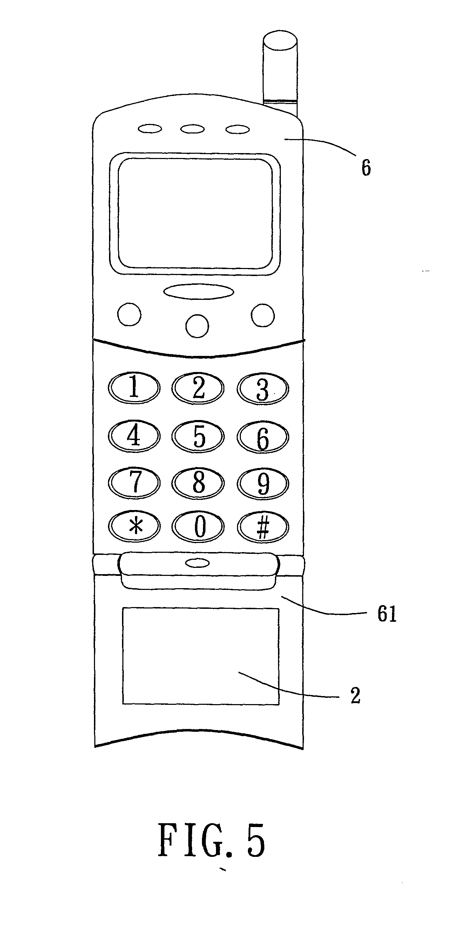

Referring to Figures 1 to 4, the preferred embodiment of a device for charging a battery unit 5 of a mobile telephone handset 6 (see Figure 5) according to the present invention is shown to include an electric field generating unit 1 for generating an electric field, and a charging current generating unit 2 adapted to be disposed on the mobile telephone handset 6.

The electric field generating unit 1 includes a coil device 10 adapted to be connected to an alternating current power source 4 via a connecting cable 12 such that a corresponding electric field is generated in a known manner when alternating current flows through the coil device 10, and a casing 11 for housing the coil device 10.

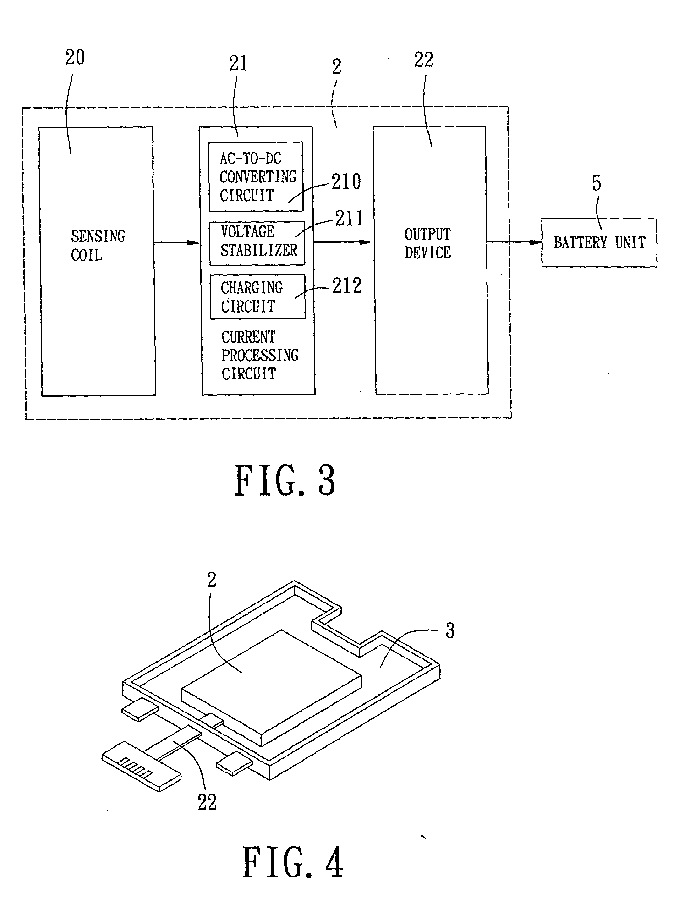

Referring to Figure 3, the charging current generating unit 2 includes a sensing coil 20, a current processing circuit 21 and an output device 22. The sensing coil 20 senses the electric field from the electric field generating unit 1 that is disposed externally thereof, and generates a current signal corresponding to the electric field sensed thereby. As the orientation of the electric field generated by the electric field generating unit 1 will change with the direction of the flow of alternating current through the sensing coil 10, the direction of electric current induced in the sensing coil 20 will also change accordingly. The current processing circuit 21 is coupled electrically to the sensing coil 20 for receiving and processing the current signal so as to result in a charging current that is adapted to charge the battery unit 5 of the mobile telephone handset 6. The current processing circuit 21 includes an AC-to-DC converting circuit 210, a voltage stabilizer 211 coupled to the converting circuit 210, and a charging circuit 212 coupled to the voltage stabilizer 211. As the converting circuit 210, the voltage stabilizer 211, and the charging circuit 212 are all known in the art, a detailed description thereof is dispensed with herein for the sake of brevity. The output device 22 is coupled to the current processing circuit 21 and is adapted to supply the charging current to the battery unit 5. In this embodiment, the output device 22 is in the form of a connecting cable that is adapted to connect with a power supply socket (not shown) of the mobile telephone handset 6.

In the first preferred state of use, the charging current generating unit 2 is disposed on a battery cap 3 (see Figure 4) of the mobile telephone handset 6 (see Figure 5). In the second preferred state of use shown in Figure 5, the charging current generating unit 2 is disposed on an inner surface of a protective lid 61 hingedly connected to a lower edge of the mobile telephone handset 6. It is noted that the charging current generating unit 2 may be disposed on any other suitable part of the mobile telephone handset 6.

Based on the aforesaid construction, when it is desired to charge the battery unit 5, it is only necessary to place the mobile telephone handset 6 together with the battery unit 5 in the vicinity of the electric field generating unit 1 such that the sensing coil 20 of the charging current generating unit 2 can sense the electric field generated by the coil device 10 of the externally disposed electric field generating unit 1. The sensing coil 20 will then generate a current signal for processing by the current processing circuit 21 to result in a charging current to charge the battery unit 5. As such, so long as a mobile telephone handset is equipped with a charging current generating unit 2 of this invention, charging of the battery unit thereof can proceed without the need for a matching battery charger.

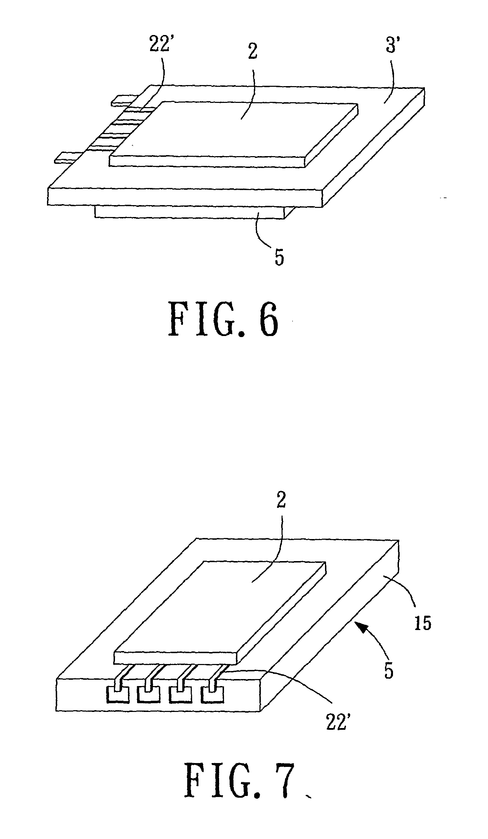

Figure 6 shows the charging current generating unit 2 according to the present invention in the third preferred state of use. In this state, the charging current generating unit 2 is disposed on one side of the battery cap 3' of the mobile telephone handset so as to charge the battery unit 5 that is disposed on the other side of the battery cap 3'.

Figure 7 shows the charging current generating unit 2 in the fourth preferred state of use. In this state, the charging current generating unit 2 is disposed on a main body 51 of the battery unit 5.

In the embodiments of Figures 6 and 7, the output device 22' of the charging current generating unit 2 is in the form of conductive contacts adapted to establish electrical contact with the battery unit 5. Certainly, the output device 22' may have any other suitable forms. On the other hand, the output device 22' may be configured to be concealed.

While the present invention has been described in connection with what is considered the most practical and preferred embodiments, it is understood that this invention is not limited to the disclosed embodiments but is intended to cover various arrangements included within the spirit and scope of the broadest interpretation so as to encompass all such modifications and equivalent arrangements.

## Claims

1. A device for charging a battery unit of a mobile telephone handset, comprising:
an electric field generating unit for generating an electric field; and
a charging current generating unit adapted to be disposed on the mobile telephone handset and including
a sensing coil for sensing the electric field from said electric field generating unit and for generating a current signal corresponding to the electric field sensed thereby, and
a current processing circuit, coupled electrically to said sensing coil, for receiving and processing the current signal so as to result in a charging current that is adapted to charge the battery unit of the mobile telephone handset.

2. The device of Claim 1, wherein said current processing circuit includes an AC-to-DC converting circuit, a voltage stabilizer coupled to said converting circuit, and a charging circuit coupled to said voltage stabilizer.

3. The device of Claim 1 or 2, wherein said charging current generating unit further includes an output device coupled to said current processing circuit and adapted to supply the charging current to the battery unit.

4. The device of Claim 3, wherein said output device includes a connecting cable adapted to connect with a power supply socket of the mobile telephone handset.

5. The device of any one of the preceding Claims, wherein said electric field generating unit includes a coil device adapted to be connected to an alternating current power source, and a casing for housing said coil device.

6. A charging current generating unit adapted to be disposed on a mobile telephone handset so as to charge a battery unit of the mobile telephone handset, said charging current generating unit comprising:
a sensing coil adapted to sense an electric field from an external electric field generating unit, said sensing coil generating a current signal corresponding to the electric field sensed thereby; and
a current processing circuit, coupled electrically to said sensing coil, for receiving and processing the current signal so as to result in a charging current that is adapted to charge the battery unit.

7. The charging current generating unit of Claim 6, wherein said current processing circuit includes an AC-to-DC converting circuit, a voltage stabilizer coupled to said converting. circuit, and a charging circuit coupled to said voltage stabilizer.

8. The charging current generating unit of Claim 6 or 7, further comprising an output device coupled to said current processing circuit and adapted to supply the charging current to the battery unit.

9. The charging current generating unit of Claim 8, wherein said output device includes a connecting cable adapted to connect with a power supply socket of the mobile telephone handset.

10. The charging current generating unit of Claim 8 or 9, wherein said output device includes conductive contacts adapted to connect with the battery unit.

11. A charging current generating unit adapted to be disposed on a battery unit of a mobile telephone handset, comprising:
a sensing coil adapted to sense an electric field from an external electric field generating unit, said sensing coil generating a current signal corresponding to the electric field sensed thereby; and
a current processing circuit, coupled electrically to said sensing coil, for receiving and processing the current signal so as to result in a charging current that is adapted to charge the battery unit.

12. The charging current generating unit of Claim 11, wherein said current processing circuit includes an AC-to-DC converting circuit, a voltage stabilizer coupled to said converting circuit, and a charging circuit coupled to said voltage stabilizer.

13. The charging current generating unit of Claim 11 or 12, further comprising an output device coupled to said current processing circuit and adapted to supply the charging current to the battery unit.

14. The charging current generating unit of Claim 13, wherein said output device includes conductive contacts adapted to connect with the battery unit.

15. A battery unit for a mobile telephone handset, comprising:
a main body; and
a charging current generating unit disposed on said main body and including
a sensing coil adapted to sense an electric field from an external electric field generating unit, said sensing coil generating a current signal corresponding to the electric field sensed thereby, and
a current processing circuit, coupled electrically to said sensing coil, for receiving and processing the current signal so as to result in a charging current that is used to charge the main body.

16. The battery unit of Claim 15, wherein said current processing circuit includes an AC-to-DC converting circuit, a voltage stabilizer coupled to said converting circuit, and a charging circuit coupled to said voltage stabilizer.

17. The battery unit of Claim 15 or 16, wherein said charging current generating unit further includes an output device coupled to said current processing circuit so as to supply the charging current to said main body.

18. The battery unit of Claim 17, wherein said output device includes conductive contacts for connecting with said main body.
